(19) Europäisches Patentamt

European Patent Office

Office européen des brevets

(11) **EP 4 604 007 A1**

(12) **EUROPEAN PATENT APPLICATION**

(43) Date of publication:
**20.08.2025 Bulletin 2025/34**

(21) Application number: **25154419.3**

(22) Date of filing: **28.01.2025**

(51) International Patent Classification (IPC):
**G06F 40/30** (2020.01)     **G06N 5/04** (2023.01)
**G06N 20/00** (2019.01)     G06N 3/006 (2023.01)

(52) Cooperative Patent Classification (CPC):
**G06N 5/04; G06F 40/30; G06N 20/00;** G06N 3/006

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.02.2024 CN 202410178013**

(71) Applicants:
• **Beijing Youzhuju Network Technology Co., Ltd.**
  **Beijing 101299 (CN)**
• **Fudan University**
  **Shanghai 200433 (CN)**

(72) Inventors:
• **ZHANG, Xinbo**
  **Beijing, 100028 (CN)**
• **JIN, Senjie**
  **Beijing, 100028 (CN)**

• **SUN, Peng**
  **Beijing, 100028 (CN)**
• **XI, Zhiheng**
  **Beijing, 100028 (CN)**
• **CHEN, Wenxiang**
  **Beijing, 100028 (CN)**
• **HONG, Boyang**
  **Beijing, 100028 (CN)**
• **ZHENG, Rui**
  **Beijing, 100028 (CN)**
• **GUI, Tao**
  **Beijing, 100028 (CN)**
• **ZHANG, Qi**
  **Beijing, 100028 (CN)**
• **HUANG, Xuanjing**
  **Beijing, 100028 (CN)**

(74) Representative: **Grünecker Patent- und**
**Rechtsanwälte**
**PartG mbB**
**Leopoldstraße 4**
**80802 München (DE)**

(54) **METHOD, APPARATUS, DEVICE, AND STORAGE MEDIUM FOR INFORMATION PROCESSING**

(57)     Embodiments of the present disclosure relate to a method, an apparatus, a device, and a storage medium for information processing. The method proposed herein includes: obtaining a sample question and policy information for solving the sample question; determining, by splitting the policy information, an inference process corresponding to at least one intermediate solution state of the sample question; generating at least one input sample by combining the sample question and the inference process; and adjusting a target model based on the at least one input sample and answer information of at least one sample question.

FIG. 2

**EP 4 604 007 A1**

## Description

### FIELD

Example embodiments of the present disclosure generally relate to the field of computers, and in particular, to a method, an apparatus, a device, and a computer-readable storage medium for information processing.

### BACKGROUND

With the development of computer technology, various models are gradually applied to various aspects in people's daily lives. For example, some models may perform solving with respect to questions in specific fields. For example, taking a mathematical question as an example, some models may provide a solving process for such a mathematical question.

### SUMMARY

In a first aspect of the present disclosure, a method for information processing is provided. The method includes: obtaining a sample question and policy information for solving the sample question; determining, by splitting the policy information, an inference process corresponding to at least one intermediate solution state of the sample question; generating at least one input sample by combining the sample question and the inference process; and adjusting a target model based on the at least one input sample and answer information of at least one sample question.

In a second aspect of the present disclosure, an apparatus for information processing is provided. The apparatus includes: an obtaining module configured to obtain a sample question and policy information for solving the sample question; a determination module configured to determine, by splitting the policy information, an inference process corresponding to at least one intermediate solution state of the sample question; a generation module configured to generate at least one input sample by combining the sample question and the inference process; and an adjustment module configured to adjust a target model based on the at least one input sample and answer information of at least one sample question.

In a third aspect of the present disclosure, an electronic device is provided. The device includes at least one processing unit, and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, and the computer program is executable by a processor to implement the method of the first aspect.

It should be understood that the content described in this section is not intended to limit the key features or important features of the embodiments of the present disclosure, nor is it intended to limit the scope of the present disclosure. Other features of the present disclosure will become readily understood from the following description.

### BRIEF DESCRIPTION OF THE DRAWINGS

The above and other features, advantages, and aspects of various embodiments of the present disclosure will become more apparent when taken in conjunction with the drawings and with reference to the following detailed description. In the drawings, the same or similar reference signs refer to the same or similar elements, where:

FIGS. 1A and 1B illustrate example processes of training a model according to a conventional solution;

FIG. 2 illustrates a flowchart of an example model training process according to some embodiments of the present disclosure;

FIG. 3 illustrates a schematic diagram of information processing according to some embodiments of the present disclosure;

FIG. 4 illustrates a schematic structural block diagram of an example apparatus for information processing according to some embodiments of the present disclosure; and

FIG. 5 illustrates a block diagram of an electronic device capable of implementing multiple embodiments of the present disclosure.

## DETAILED DESCRIPTION

The embodiments of the present disclosure will be described in more detail below with reference to the drawings. Although some embodiments of the present disclosure are shown in the drawings, it should be understood that the present disclosure may be implemented in various forms and should not be construed as limited to the embodiments set forth herein. Rather, these embodiments are provided for a thorough and complete understanding of the present disclosure. It should be understood that the drawings and embodiments of the present disclosure are only for exemplary purposes, and are not intended to limit the protection scope of the present disclosure.

It should be noted that the titles of any sections/subsections provided in this article are not limiting. Various embodiments are described throughout this article, and any type of embodiment may be included under any section/subsection. In addition, the embodiments described in any section/subsection may be combined in any way with any other embodiments described in the same section/subsection and/or different section/subsections.

In the description of the embodiments of the present disclosure, the term "include/comprise" and its similar terms should be understood as open inclusion, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. Terms "first", "second", etc. may refer to different or same objects. Other explicit and implicit definitions may also be included below.

The embodiments of the present disclosure may involve user data, data acquisition and/or use, etc. These aspects follow the corresponding laws, regulations and related regulations. In the embodiments of the present disclosure, the collection, acquisition, processing, forwarding, use, etc. of all data are performed on the premise that the user knows and confirms. Correspondingly, when implementing the embodiments of the present disclosure, the user should be informed of the type, range of use, usage scenarios, etc. of data or information that may be involved, and the user's authorization should be obtained, in an appropriate manner in accordance with relevant laws and regulations. The specific manner of informing and/or authorization may change with actual situations and application scenarios, and the scope of the present disclosure is not limited in this respect.

If the solutions in this specification and the embodiments involve personal information processing, the processing will be performed on the premise that there is a legal basis (for example, the consent of the subject of personal information is obtained, or it is necessary to perform a contract, etc.), and the processing will only be performed within the scope specified or agreed. The user's refusal to process personal information other than the necessary information required for the basic functions will not affect the user's use of the basic functions.

As briefly mentioned above, with the development of computer technology, various models are gradually applied to various aspects in people's daily lives. For example, some models may perform solving with respect to questions in specific fields. For example, taking a mathematical question as an example, some models may provide a solving process for such a mathematical question.

The conventional model training process includes a reinforcement learning method based on result supervision and a process-based reinforcement learning process.

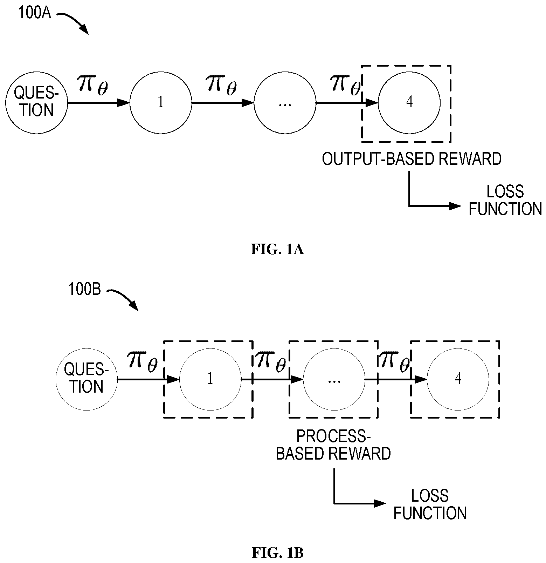

FIGS. 1A and 1B illustrate schematic diagrams 100A and 100B of training a model according to conventional solutions. Specifically, FIG. 1A illustrates a reinforcement learning process based on result supervision, which determines reward information according to a final output result of the model, and determines a loss function of the reinforcement learning process accordingly. FIG. 1B illustrates a reinforcement learning process based on process supervision, which determines reward information corresponding to each inference stage according to an inference process of respective inference stage of the model, and determines a loss function of the reinforcement learning process accordingly.

The result supervision shown in FIG. 1A can provide sparse reward information for the final result, but cannot perceive the stage where the inference error occurs. On the contrary, the process supervision shown in FIG. 1B can provide step-by-step rewards, but this requires a large amount of manually labeled information.

The embodiments of the present disclosure propose a solution for information processing. According to this solution, a sample question and policy information for solving the sample question are obtained; an inference process corresponding to at least one intermediate solution state of the sample question is determined by splitting the policy information; at least one input sample is generated by combining the sample question and the inference process; and a target model is adjusted based on the at least one input sample and answer information of at least one sample question.

In this way, the embodiments of the present disclosure can optimize the inference ability of the model in various stage through reinforcement learning based on a comparison between the answer output by the model from the intermediate solution state and a standard answer, thereby improving the exploration ability of the model in various stage of solving the question.

Various example implementations of this solution will be described in detail below with further reference to the drawings.

Example training process

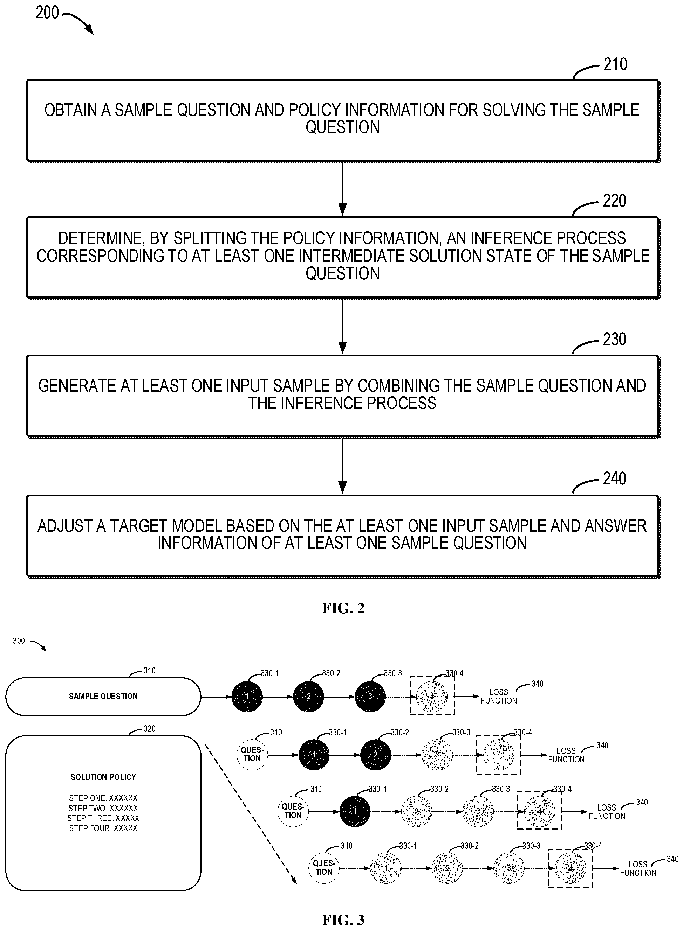

A model training process according to some embodiments of the present disclosure will be described below with reference to FIG. 2 and FIG. 3. FIG. 2 illustrates a flowchart of an example process 200 for information processing according to some embodiments of the present disclosure. The process 200, for example, may be implemented at an appropriate electronic device.

As shown in FIG. 2, at block 210, the electronic device obtains a sample question and policy information for solving the sample question.

The process 200 will be described below with reference to FIG. 3. FIG. 3 illustrates a schematic diagram 300 of information processing according to some embodiments of the present disclosure.

As shown in FIG. 3, the electronic device may obtain a sample question 310 and policy information 320. The policy information 320 may include a solution policy for solving the sample question 310. As an example, the policy information 320 may include a plurality of steps, for example, step one to step four.

Continuing to refer to FIG. 2, the electronic device may determine, by splitting the policy information, an inference process corresponding to at least one intermediate solution state of the sample question.

In some embodiments, the electronic device may split the policy information into sub-policies corresponding to different inference stages with respect to at least one separator included in the policy information 320. Taking FIG. 3 as an example, the electronic device may split the policy information 320 into four sub-policies corresponding to four inference stages according to "line breaks".

Correspondingly, the solving of the sample question 310 may include intermediate solution states corresponding to different inference stages. For example, an intermediate solution state 330-1 may correspond to a state after a first inference stage (for example, step one); an intermediate solution state 330-2 may correspond to a state after a second inference stage (for example, step two); an intermediate solution state 330-3 may correspond to a state after a third inference stage (for example, step three). A state 330-4 may correspond to a state where the solving of the sample question 310 is completed.

In some embodiments, the electronic device may further split the policy information 320 in other appropriate manners to split the policy information 320 into a plurality of sub-policies, thereby determining a plurality of intermediate solution states in the solving process. For example, the electronic device may evenly split the policy information into a predetermined number of inference stages.

Further, the electronic device may determine, based on the policy information 320, the inference processes corresponding to the intermediate solution states 330-1 to 330-3. For example, the inference process corresponding to the intermediate solution state 330-1 is "step one: XXXXXX"; the inference process corresponding to the intermediate solution state 330-2 is "step one: XXXXXX + step two: XXXXXX"; and the inference process corresponding to the intermediate solution state 330-3 is "step one: XXXXXX + step two: XXXXXX + step three: XXXXXX".

Continuing to refer to FIG. 2, the electronic device generates at least one input sample by combining the sample question and the inference process.

Continuing the example in FIG. 3, the electronic device may construct, for example, an input sample corresponding to the intermediate solution state 330-1 as "sample question + step one: XXXXXX"; construct an input sample corresponding to the intermediate solution state 330-2 as "sample question + step one: XXXXXX + step two: XXXXXX"; and construct an input sample corresponding to the intermediate solution state 330-3 as "sample question + step one: XXXXXX + step two: XXXXXX + step three: XXXXXX".

Based on this manner, the embodiments of the present disclosure may enable the target model to explore the solving process of the sample question from the intermediate solution state of the question.

Continuing to refer to FIG. 2, at block 240, the electronic device adjusts a target model based on the at least one input sample and answer information of at least one sample question.

Specifically, the electronic device may provide the constructed at least one input sample to the target model, and may obtain a candidate answer generated by the target model based on the at least one input sample.

Further, the electronic device may determine reward information based on a comparison between the candidate answer and the answer information.

In some embodiments, for a process of the target model starting inference from the intermediate solution state, the electronic device may determine the reward information based on a comparison between the candidate answer output by the target model and the answer information. Specifically, the electronic device may determine the reward information according to the following formula (1):

$$rf_o(s_{T-1}, a_T) = \begin{cases} 1, & \text{answer is correct} \\ \epsilon, & \text{numeric answer is output, but it is inaccurate} \\ 0, & \text{non} - \text{numeric answer is output} \end{cases} \quad (1)$$

where ST 1 denotes the intermediate solution state, where T denotes the serial number of the final solution state (which is 4 in the example in FIG. 3); and $a_T$ denotes an action taken at the T-th step.

That is, when the candidate answer matches the answer information, the electronic device may set the reward corresponding to the answer to a first value, for example, 1.

When the candidate answer does not match the answer information and the type of the candidate answer satisfies a preset condition, the electronic device may set the reward corresponding to the answer to a second value, for example, 0.1 or 0.2, etc. When the question to be solved is a mathematical question, the preset condition may refer to, for example, that the type of the candidate answer is a numeric type.

Additionally, when the candidate answer does not match the answer information and the type of the candidate answer does not satisfy the preset condition, the electronic device may set the reward corresponding to the answer to a third value, for example, 0.

In some embodiments, the electronic device may further determine the reward information considering a degree of change in policy information during the training process.

Specifically, the electronic device may determine a first reward part based on the formula (1). Additionally, the electronic device may further determine a second reward part based on a comparison between first policy information after the target model is trained and initial second policy information. The first policy information and the second policy information correspond to an inference process of determining the candidate answer according to the at least one intermediate solution state.

Further, the electronic device may determine the reward information based on the first reward part and the second reward part. Exemplarily, the reward information may be expressed as:

$$r_{final}(s_{t-1}, a_t) = r_o(s_{t-1}, a_t)$$
$$- \beta \mathrm{KL}\left(\pi_\theta^{RL}(\cdot|s_{t-1}), \pi_\theta^{Init}(\cdot|s_{t-1})\right) \quad (2)$$

where KL denotes a KL divergence operation, $\pi_\theta^{RL}(\cdot|s_{t-1})$ denotes policy information after reinforcement learning, $\pi_\theta^{Init}(\cdot|s_{t-1})$ denotes the initial policy information before reinforcement learning, and β is a weight coefficient.

Additionally, the electronic device may adjust the target model based on the reward information and according to a reinforcement learning process. Exemplarily, the electronic device may train the target model with the reward information represented by formula (2).

In some embodiments, the electronic device may construct a first sample set based on the generated at least one input sample. Such a first sample set may include a plurality of input samples corresponding to a same intermediate solution state.

For example, the electronic device may construct a plurality of input samples corresponding to the same intermediate solution state 330-3 based on different sample questions. Further, the electronic device may train the target model using the plurality of input samples in the first sample set. Specifically, the electronic device may determine total reward information based on output results of the target model for the plurality of input samples, and according to formula (2), to determine a loss function 340 for adjusting a parameter of the target model.

Therefore, the embodiments of the present disclosure may utilize reward information based on result supervision to improve the exploration ability of the target model to perform inference from the intermediate solution state.

In some embodiments, the electronic device may further train the target model progressively in a reverse order. Specifically, as shown in FIG. 3, after performing reinforcement learning on the target model using the first sample set corresponding to the intermediate solution state 330-3, the electronic device may further perform reinforcement learning on the target model using a second sample set corresponding to the intermediate solution state 330-2.

Specifically, the electronic device may construct a plurality of input samples corresponding to the intermediate solution state 330-2 based on a similar process. The intermediate solution state 330-2 may correspond to a previous intermediate solution state of the intermediate solution state 330-3, that is, the solution degree of the intermediate solution state 330-2 is lower than that of the intermediate solution state 330-3.

Based on this manner, the electronic device may further perform reinforcement learning on the target model using a plurality of input samples corresponding to the intermediate solution state 330-1 after performing reinforcement learning on the target model using the plurality of input samples corresponding to the intermediate solution state 330-2, until finally performing reinforcement learning on the target model using the sample question based on result supervision.

Based on such a reverse order training process, the embodiments of the present disclosure can improve the policy exploration ability of the model for different intermediate states without relying too much on manually labeled data.

In some embodiments, the electronic device may further perform the reinforcement learning process of the target model using a mixed sample set. Specifically, the electronic device may construct a third sample set based on the at least one input sample, where the third sample set includes a plurality of input samples corresponding to a plurality of intermediate solution states.

For example, such a third sample set may include not only input samples corresponding to the intermediate solution state 330-3, but also input samples corresponding to the intermediate solution state 330-1 and/or the intermediate solution state 330-2.

Further, the electronic device may determine the reward information corresponding to each input sample based on the formula (2) discussed above, and may determine an overall loss function 340 for the third sample set. Further, the electronic device may adjust the parameter of the target model based on the overall loss function, thereby completing the reinforcement learning process of the target model.

Compared with a strictly reverse-order training process, a reinforcement learning process based on a mixed sample set can ensure a smooth transition and collaborative optimization between tasks of different difficulties, stabilize the training process, and improve the inference performance.

In some embodiments, the sample question discussed above may include an appropriate type of multi-stage inference question, such as a mathematical question, etc. Additionally, the target model mentioned above may include a machine learning-based language model.

Example apparatus and device

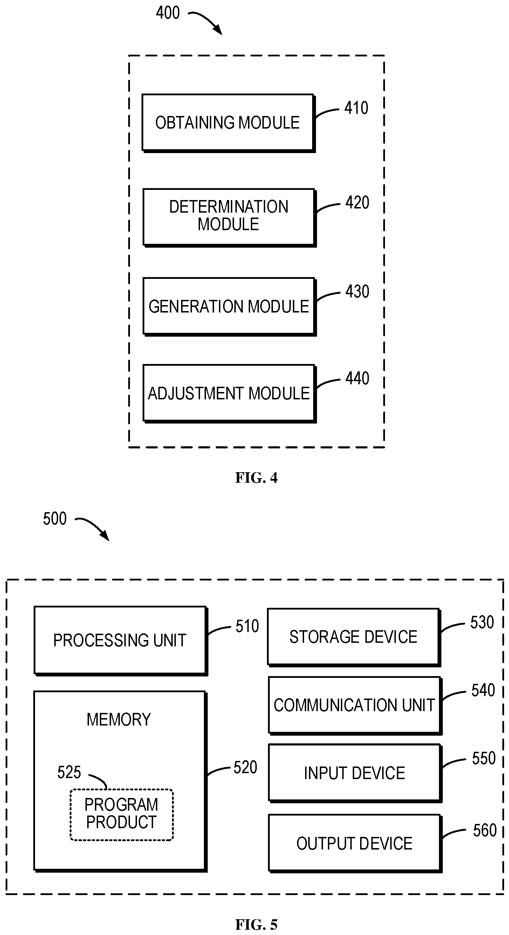

The embodiments of the present disclosure further provide a corresponding apparatus for implementing the above method or process. FIG. 4 illustrates a schematic structural block diagram of an example apparatus 400 for information processing according to some embodiments of the present disclosure. The apparatus 400 may be implemented or included in an electronic device. The components in the apparatus 400 may be implemented in hardware, software, firmware, or any combination thereof.

As shown in FIG. 4, the apparatus 400 includes an obtaining module 410 configured to obtain a sample question and policy information for solving the sample question; a determination module 420 configured to determine, by splitting the policy information, an inference process corresponding to at least one intermediate solution state of the sample question; a generation module 430 configured to generate at least one input sample by combining the sample question and the inference process; and an adjustment module 440 configured to adjust a target model based on the at least one input sample and answer information of at least one sample question.

In some embodiments, the adjustment module 440 is further configured to: obtain a candidate answer generated by the target model based on the at least one input sample; determine reward information based on a comparison between the candidate answer and the answer information; and adjust the target model based on the reward information.

In some embodiments, the adjustment module 440 is further configured to: determine the reward information based on a first value in response to the candidate answer matching the answer information; determine the reward information based on a second value in response to the candidate answer not matching the answer information and a type of the candidate answer satisfying a preset condition; or determine the reward information based on a third value in response to the candidate answer not matching the answer information and the type of the candidate answer not satisfying the preset condition.

In some embodiments, the adjustment module 440 is further configured to: determine a first reward part based on the comparison between the candidate answer and the answer information; determine a second reward part based on a comparison between first policy information after the target model is trained and initial second policy information, the first policy information and the second policy information corresponding to an inference process of determining the candidate answer according to the at least one intermediate solution state; and determine the reward information based on the first reward part and the second reward part.

In some embodiments, the adjustment module 440 is further configured to: construct a first sample set based on the at least one input sample, the first sample set including a plurality of input samples corresponding to a same intermediate solution state; and adjust the target model using the first sample set.

In some embodiments, the intermediate solution state is a first intermediate solution state, and the adjustment module 440 is further configured to: construct a second sample set based on the at least one input sample, the second sample set including a plurality of input samples corresponding to a second intermediate solution state, where a degree of the first intermediate solution state is greater than a degree of the second intermediate solution state; and adjust the target model using the second sample set after adjusting the target model using the first sample set.

In some embodiments, the adjustment module 440 is further configured to: construct a third sample set based on the at least one input sample, the third sample set including a plurality of input samples corresponding to a plurality of intermediate solution states; and adjust the target model using the third sample set.

In some embodiments, the determination module 420 is further configured to split the policy information based on at least one separator in the policy information.

In some embodiments, the sample question includes a mathematical question, and the target model includes a language model.

FIG. 5 illustrates a block diagram of an electronic device 500 in which one or more embodiments of the present disclosure can be implemented. It should be understood that the electronic device 500 shown in FIG. 5 is only exemplary, and should not constitute any limitation on the function and scope of the embodiments described herein. The electronic device 500 shown in FIG. 5 may be used for an electronic device.

As shown in FIG. 5, the electronic device 500 is in the form of a general-purpose electronic device. The components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and can perform various processes according to programs stored in the memory 520. In a multiprocessor system, a plurality of processing units execute computer-executable instructions in parallel to improve the parallel processing capability of the electronic device 500.

The electronic device 500 usually includes a plurality of computer storage media. Such media may be any available media accessible by the electronic device 500, including but not limited to volatile and non-volatile media, and detachable and non-detachable media. The memory 520 may be a volatile memory (for example, a register, a cache, a random access memory (RAM)), a non-volatile memory (for example, a read only memory (ROM), an electrically erasable programmable read-only memory (EEPROM), a flash memory), or some combination thereof. The storage device 530 may be a detachable or non-detachable medium, and may include a machine-readable medium, such as a flash drive, a disk, or any other medium that can be used to store information and/or data and can be accessed within the electronic device 500.

The electronic device 500 may further include additional detachable/non-detachable, volatile/non-volatile storage media. Although not shown in FIG. 5, a disk drive for reading or writing from a detachable, non-volatile disk (for example, a "floppy disk") and an optical disk drive for reading or writing from a detachable, non-volatile optical disk may be provided. In these cases, each drive may be connected to a bus (not shown) by one or more data medium interfaces. The memory 520 may include a computer program product 525 having one or more program modules configured to perform various methods or actions of various embodiments of the present disclosure.

The communication unit 540 enables communication with other electronic devices through a communication medium. Additionally, the functions of the components of the electronic device 500 may be implemented in a single computing cluster or multiple computing machines that can communicate through communication connections. Therefore, the electronic device 500 may operate in a networked environment using a logical connection with one or more other servers, network personal computers (PCs), or another network node.

The input device 550 may be one or more input devices, such as a mouse, a keyboard, a trackball, etc. The output device 560 may be one or more output devices, such as a display, a speaker, a printer, etc. The electronic device 500 may further communicate with one or more external devices (not shown) through the communication unit 540 as required, the external devices such as storage devices, display devices, etc., communicate with one or more devices that enable the user to interact with the electronic device 500, or communicate with any device (for example, a network card, a modem, etc.) that enables the electronic device 500 to communicate with one or more other electronic devices. Such communication may be performed via an input/output (I/O) interface (not shown).

According to an example implementation of the present disclosure, a computer-readable storage medium is provided, on which computer-executable instructions are stored, where the computer-executable instructions are executed by a processor to implement the method described above. According to an example implementation of the present disclosure, a computer program product is further provided, which is tangibly stored on a non-transitory computer-readable medium and includes computer-executable instructions, and the computer-executable instructions are executed by a processor to implement the method described above.

Various aspects of the present disclosure are described herein with reference to the flowcharts and/or block diagrams of the method, apparatus, device, and computer program product implemented according to the present disclosure. It should be understood that each block of the flowchart and/or block diagram and the combination of blocks in the flowchart and/or block diagram may be implemented by computer-readable program instructions.

These computer-readable program instructions may be provided to a processing unit of a general-purpose computer, a special-purpose computer, or other programmable data processing apparatus, thereby producing a machine that, when these instructions are executed by the processing unit of the computer or other programmable data processing apparatus, generates an apparatus for implementing the functions/acts specified in one or more blocks in the flowchart and/or block diagram. These computer-readable program instructions may also be stored in a computer-readable storage medium. These instructions enable the computer, programmable data processing apparatus, and/or other devices to work in a specific way. Therefore, the computer-readable medium storing the instructions includes a product, which includes instructions for implementing various aspects of the functions/acts specified in one or more blocks in the flowchart and/or block diagram.

The computer-readable program instructions may be loaded onto a computer, other programmable data processing apparatus, or other device, causing a series of operational steps to be performed on the computer, other programmable data processing apparatus, or other device to generate a computer-implemented process, such that the instructions performed on the computer, other programmable data processing apparatus, or other device implement the functions/acts specified in one or more blocks in the flowchart and/or block diagram.

The flowchart and block diagram in the drawings show the architecture, functionality, and operation of possible implementations of systems, methods, and computer program products according to multiple implementations of the present disclosure. In this regard, each block in the flowchart or block diagram may represent a module, a program segment, or a part of an instruction, and the module, program segment, or part of the instruction contains one or more executable instructions for implementing the specified logical function. In some alternative implementations, the functions noted in the blocks may also occur out of the order noted in the drawings. For example, two consecutive blocks may, in fact, be executed substantially in parallel, or the blocks may sometimes be executed in the reverse order, depending on the functions involved. It should also be noted that each block of the block diagram and/or flowchart, and the combination of blocks in the block diagram and/or flowchart, may be implemented by a dedicated hardware-based system that performs the specified functions or acts, or may be implemented by a combination of dedicated hardware and computer instructions.

Various implementations of the present disclosure have been described above, and the above description is exemplary and not exhaustive, and is not limited to the disclosed implementations. Many modifications and changes will be apparent to those of ordinary skill in the art without departing from the scope and spirit of the described implementations. The selection of terms used herein is intended to best explain the principles, practical applications, or improvements of the technologies in the market of the implementations, or to enable other ordinary skilled in the art to understand the various implementations disclosed herein.

**Claims**

1. A method (200) for information processing, comprising:

   obtaining (210) a sample question and policy information for solving the sample question;
   determining (220), by splitting the policy information, an inference process corresponding to at least one intermediate solution state of the sample question;
   generating (230) at least one input sample by combining the sample question and the inference process; and
   adjusting (240) a target model based on the at least one input sample and answer information of at least one sample question.

2. The method (200) according to claim 1, wherein adjusting (240) the target model based on the at least one input sample and the answer information of the at least one sample question comprises:

   obtaining a candidate answer generated by the target model based on the at least one input sample;
   determining reward information based on a comparison between the candidate answer and the answer information; and
   adjusting the target model based on the reward information.

3. The method (200) according to claim 2, wherein determining the reward information based on the comparison between the candidate answer and the answer information comprises:

   in response to the candidate answer matching the answer information, determining the reward information based on a first value;
   in response to the candidate answer not matching the answer information and a type of the candidate answer satisfying a preset condition, determining the reward information based on a second value; or
in response to the candidate answer not matching the answer information and the type of the candidate answer not satisfying the preset condition, determining the reward information based on a third value.

4. The method (200) according to claim 2, wherein determining the reward information based on the comparison between the candidate answer and the answer information comprises:

determining a first reward part based on the comparison between the candidate answer and the answer information;
determining a second reward part based on a comparison between adjusted first policy information and initial second policy information, the first policy information and the second policy information corresponding to an inference process of determining the candidate answer according to the at least one intermediate solution state; and
determining the reward information based on the first reward part and the second reward part.

5. The method (200) according to claim 1, wherein adjusting (240) the target model based on the at least one input sample and the answer information of the sample question comprises:

constructing a first sample set based on the at least one input sample, the first sample set comprising a plurality of input samples corresponding to a same intermediate solution state; and
adjusting the target model by using the first sample set.

6. The method (200) according to claim 5, wherein the intermediate solution state is a first intermediate solution state, and adjusting (240) the target model based on the at least one input sample and the answer information of the sample question further comprises:

constructing a second sample set based on the at least one input sample, the second sample set comprising a plurality of input samples corresponding to a second intermediate solution state, wherein a solution degree of the first intermediate solution state is greater than a solution degree of the second intermediate solution state; and
adjusting the target model by using the second sample set after adjusting the target model by using the first sample set.

7. The method (200) according to claim 1, wherein adjusting (240) the target model based on the at least one input sample and the answer information of the sample question comprises:

constructing a third sample set based on the at least one input sample, the third sample set comprising a plurality of input samples corresponding to a plurality of intermediate solution states; and
adjusting the target model using the third sample set.

8. The method according to claim 1, wherein splitting the policy information comprises:
splitting the policy information based on at least one separator in the policy information.

9. The method (200) according to claim 1, wherein the sample question comprises a mathematical question, and the target model comprises a language model.

10. An apparatus (400) for information processing, comprising:

an obtaining module (410) configured to obtain a sample question and policy information for solving the sample question;
a determination module (420) configured to determine, by splitting the policy information, an inference process corresponding to at least one intermediate solution state of the sample question;
a generation module (430) configured to generate at least one input sample by combining the sample question and the inference process; and
an adjustment module (440) configured to adjust a target model based on the at least one input sample and answer information of at least one sample question.

11. The apparatus (400) according to claim 10, wherein adjusting the target model based on the at least one input sample and the answer information of the at least one sample question comprises:

obtaining a candidate answer generated by the target model based on the at least one input sample;

determining reward information based on a comparison between the candidate answer and the answer information; and

adjusting the target model based on the reward information.

12. The apparatus (400) according to claim 11, wherein determining the reward information based on the comparison between the candidate answer and the answer information comprises:

in response to the candidate answer matching the answer information, determining the reward information based on a first value;

in response to the candidate answer not matching the answer information and a type of the candidate answer satisfying a preset condition, determining the reward information based on a second value; or

in response to the candidate answer not matching the answer information and the type of the candidate answer not satisfying the preset condition, determining the reward information based on a third value.

13. The apparatus (400) according to claim 11, wherein determining the reward information based on the comparison between the candidate answer and the answer information comprises:

determining a first reward part based on the comparison between the candidate answer and the answer information;

determining a second reward part based on a comparison between adjusted first policy information and initial second policy information, the first policy information and the second policy information corresponding to an inference process of determining the candidate answer according to the at least one intermediate solution state; and

determining the reward information based on the first reward part and the second reward part.

14. An electronic device (500), comprising:

at least one processing unit (510); and

at least one memory (520) coupled to the at least one processing unit and storing instructions for execution by the at least one processing unit (510), the instructions, when executed by the at least one processing unit (510), causing the electronic device (500) to perform the method according to any one of claims 1 to 9.

15. A computer-readable storage medium having a computer program stored thereon, the computer program being executable by a processor to implement the method according to any one of claims 1 to 9.

100A

QUES-
TION   $\pi_\theta$   1   $\pi_\theta$   ...   $\pi_\theta$   4

OUTPUT-BASED REWARD

LOSS
FUNCTION

**FIG. 1A**

100B

QUES-
TION   $\pi_\theta$   1   $\pi_\theta$   ...   $\pi_\theta$   4

PROCESS-
BASED REWARD

LOSS
FUNCTION

**FIG. 1B**

200

210

OBTAIN A SAMPLE QUESTION AND POLICY INFORMATION FOR SOLVING THE SAMPLE QUESTION

220

DETERMINE, BY SPLITTING THE POLICY INFORMATION, AN INFERENCE PROCESS CORRESPONDING TO AT LEAST ONE INTERMEDIATE SOLUTION STATE OF THE SAMPLE QUESTION

230

GENERATE AT LEAST ONE INPUT SAMPLE BY COMBINING THE SAMPLE QUESTION AND THE INFERENCE PROCESS

240

ADJUST A TARGET MODEL BASED ON THE AT LEAST ONE INPUT SAMPLE AND ANSWER INFORMATION OF AT LEAST ONE SAMPLE QUESTION

**FIG. 2**

300

310
SAMPLE QUESTION

320
SOLUTION POLICY
STEP ONE: XXXXXX
STEP TWO: XXXXXX
STEP THREE: XXXXX
STEP FOUR: XXXXX

330-1 330-2 330-3 330-4
1 2 3 4
LOSS FUNCTION 340

310 330-1 330-2 330-3 330-4
QUES-TION 1 2 3 4
LOSS FUNCTION 340

310 330-1 330-2 330-3 330-4
QUES-TION 1 2 3 4
LOSS FUNCTION 340

310 330-1 330-2 330-3 330-4
QUES-TION 1 2 3 4
LOSS FUNCTION 340

**FIG. 3**

400

OBTAINING MODULE — 410

DETERMINATION MODULE — 420

GENERATION MODULE — 430

ADJUSTMENT MODULE — 440

**FIG. 4**

500

PROCESSING UNIT — 510

STORAGE DEVICE — 530

MEMORY

COMMUNICATION UNIT — 540

525

520

INPUT DEVICE — 550

PROGRAM PRODUCT

OUTPUT DEVICE — 560

**FIG. 5**

Europäisches
Patentamt

European
Patent Office

Office européen
des brevets

# EUROPEAN SEARCH REPORT

**Application Number**

EP 25 15 4419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 837 548 A (TAIKANG INSURANCE GROUP CO LTD; TK CN INSURANCE CO LTD) 25 February 2020 (2020-02-25) * page 1 - page 2 * ----- | 1-15 | INV. G06F40/30 G06N5/04 G06N20/00 |
| A | US 2023/153337 A1 (JIANG WENBIN [CN] ET AL) 18 May 2023 (2023-05-18) * the whole document * ----- | 1-15 | ADD. G06N3/006 |

**TECHNICAL FIELDS SEARCHED (IPC)**

G06N

The present search report has been drawn up for all claims

| Place of search | Date of completion of the search | Examiner |
|---|---|---|
| The Hague | 4 July 2025 | Manfrin, Max |

EPO FORM 1503 03.82 (P04C01)

**EP 4 604 007 A1**

## ANNEX TO THE EUROPEAN SEARCH REPORT
## ON EUROPEAN PATENT APPLICATION NO.

EP 25 15 4419

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2025

| Patent document cited in search report | Publication date | Patent family member(s) | Publication date |
|---|---|---|---|
| CN 110837548 A | 25-02-2020 | NONE | |
| US 2023153337 A1 | 18-05-2023 | CN 114416953 A | 29-04-2022 |
| | | JP 2023031322 A | 08-03-2023 |
| | | KR 20230008685 A | 16-01-2023 |
| | | US 2023153337 A1 | 18-05-2023 |

EPO FORM P0459

For more details about this annex : see Official Journal of the European Patent Office, No. 12/82